# EUROPEAN PATENT SPECIFICATION

(11) **EP 4 029 648 B1**
(45) Date of publication and mention of the grant of the patent: **22.05.2024**
(21) Application number: 21151489.8
(22) Date of filing: 14.01.2021
(51) Int. Cl.: B24B 9/14, B24B 41/06, B24B 13/005

(54) **BLOCK-FREE LENS SUPPORT FOR LENSES SURFACE MACHINING**
BLOCKFREIER LINSENTRÄGER ZUR LINSENOBERFLÄCHENBEARBEITUNG
SUPPORT DE LENTILLE SANS BLOC POUR LE SURFAÇAGE DE LENTILLES

(43) Date of publication of application: 20.07.2022
(73) Proprietor: MEI S.r.l., 24036 Ponte San Pietro, Bergamo (IT)
(72) Inventor: SONZOGNI, Stefano, 24036 Ponte San Pietro (BG) (IT)
(74) Representative: Kiwit, Benedikt

(56) References cited:
- WO-A1-98/43778
- WO-A1-2015/059007
- US-A1- 2008 299 881
- US-B2- 9 421 659

## Description

### 1. Field of the invention

The present invention relates to a lens supporting part for supporting a lens against forces caused in a surface machining process, in which one of two opposite side surfaces of the lens is processed. The invention also relates to a system and method for a lens surface machining process, in which the lens supporting part is used, respectively.

### 2. Technical background

The manufacturing of modern custom-made eyeglass prescription lenses requires an individualized machining process, in which it is not only possible to tailor lenses to a single prescription recipe but also to the skull morphology of the customer as well as specific geometric features of the frame chosen by the customer.

Commonly, lens blanks with different front curvatures are used in the manufacturing process of lenses. Therein, lens blanks for divergent and for convergent lenses exist. Typically, the front surface of a lens blank is finished so that no adjustment of the curvature or polishing is required on the front surface. The manufacturing process is started by choosing a lens blank with a front surface most suitable for the requirements of the application. Thereafter, the rear surface of the lens blank is processed to customize the lens, whereby a determination of how to process the rear surface in order to generate a lens with the desired shape is based on the shape of the front surface.

While it is an advantage of this approach that only one side has to be processed, it also visualises the importance of the front surface maintaining its shape throughout the entire manufacturing process to arrive at a lens with the desired shape.

In the manufacturing process, the shape of the lens is adapted by generating (thickness) differences in the curvature between the lens' front and rear surface in order to change the way the finished lens will change the course of light. The difference in curvature between the front and rear surface of the lens leads to its corrective power. Accordingly, the location of areas of different thicknesses will vary depending on the customer. Unfortunately, the areas of different thicknesses show different mechanical reactions when being exposed to machining and clamping forces. For examples, thin areas are more sensitive to the machining and clamping forces while thicker areas are more resilient and thus, are less prone to being bent or deformed. Accordingly, if such differences in the lens' ability for dissipating mechanical stress are neglected, it can lead to irregularities in the power map of the lens and thereby, eventually to the production of a lens that is out tolerance.

Therefore, there is a need to provide sufficient mechanical support to the front surface of the lens while its rear surface is machined in order to reduce the impact of the manufacturing process on the lens quality.

In the prior art, this problem has been addressed by attaching the front surface of the lens blank to a surfacing block with a bonding material, such as an adhesive, e.g. resin, glue or low melting alloy. Typically, the surfacing block remains attached to the lens throughout the entire lens generation process and the various machines involved in the process have a universal clamping system that facilitates to fix the surfacing block to the respective machine. Thereby, the surfacing block can be used also for handling the lens and as reference point in all machining steps. The surfacing block with the adhesive allows to keep a convex surface stable under the action of the machining forces and also against deformation caused by inner tensions in the lens material. This known solution is most commonly found in lens manufacturing applications.

However, such known solutions are disadvantageous, as they require connecting and disconnecting the surfacing block from the lens, which is a complex and costly process that becomes even more complicated when lenses of various shapes and curvatures are to be generated. Also, they require the use of special blocking and de-blocking appliances as well as special substances, such as adhesives, solvents, and water. Moreover, throughput times are reduced. Accordingly, such solutions are not suitable for producing different lenses with different curvatures and different power maps from lens blanks in quick succession.

In the prior art, attempts have been made to overcome some of these disadvantages by using dedicated surfacing blocks that have a predefined curvature for receiving a lens blank with exactly the same curvature. The lens blank can be attached to the surfacing block through the application of suction forces.

For example, WO 98/43778 A1 discloses a device for machining a surface and the edge of a spectacle lens. The device comprises a first holding shaft which is configured as a hollow shaft and can be displaced in the direction of its longitudinal axis so that during the surface-machining process it can be placed on the surface which is not being machined; a second holding shaft which is only placed on the previously machined surface whilst the edge is being machined; a third holding shaft which is located in the first holding shaft, said first holding shaft being configured as a hollow shaft, and which together with the second hollow shaft clamps the lens whilst the edge is being machined; and a negative pressure device which produces negative pressure in the enclosed space between the third holding shaft and the first holding shaft for holding the lens. While the problem of how to simplify connecting and disconnecting the lens from the surfacing block can be addressed with this solution, a high number of such surfacing blocks would be required to provide a suitable surfacing block for every conceivable lens curvature. Consequently, the shape of the surfacing block frequently does not fit to the lens blank. This leads to manufacturing errors and a reduction in accuracy and quality of the finished lens because the lens blank is insufficiently supported during the manufacturing process. Moreover, it was found that with this solution the strength of the vacuum is often insufficient for processing the lens with high machining speeds. Alternative solutions exist in the prior art that attempt to overcome the aforementioned disadvantages by providing a surfacing block with a support for the front surface of the lens, against which the lens blank is pressed by activating a suction force. The support has the ability to copy the front curve of the lens blank once. After the step of deforming the lens support is completed, the support is fixed so that its shape is kept in place for the rest of the subsequent machining steps. Any further deformation of the lens support during the processing is not possible with this known solution. WO 2015/059007 A1, which discloses the preamble of claim 1, and US 2008/299881 A1 are examples for such solutions.

US 9 421 659 B2 discloses a carrier device for handling a lens, which is received therein and which has a lateral edge, in a machining or finishing process. The carrier device comprises a main body and a support member for supporting the lens via the surface thereof directed toward the main body. The support member can have a ram that is guided in a linearly movable manner on the main body, and can comprise a spring mechanism, which, when subjected to a force acting in the direction of the main body, introduces a supporting force into the ram in order to support the lens on a surface directed toward the main body.

However, it has been found that this solution is insufficient for providing a lens that achieves the required high quality standards. In particular, often the lens is insufficiently and without the required accuracy supported by such surfacing blocks during the surface processing. As a result, the lens is deformed by forces existing during the machining process. However, as described above, the precision of the finished lens is dependent on the stability of the front surface. Any deformation of the existing front surface that may be caused from machining the lens can add errors to the final lens power.

Forces that could affect the lens arise either directly from the machining process, such as forces generated by a suction or clamping system for securing the lens via its front surface or machining/cutting forces. However, also inner tensions in the lens material can cause deformations. Particularly, since the lens is relatively thin and of a deformable material, such forces can have a strong impact on the shape of the surfaces of the lens.

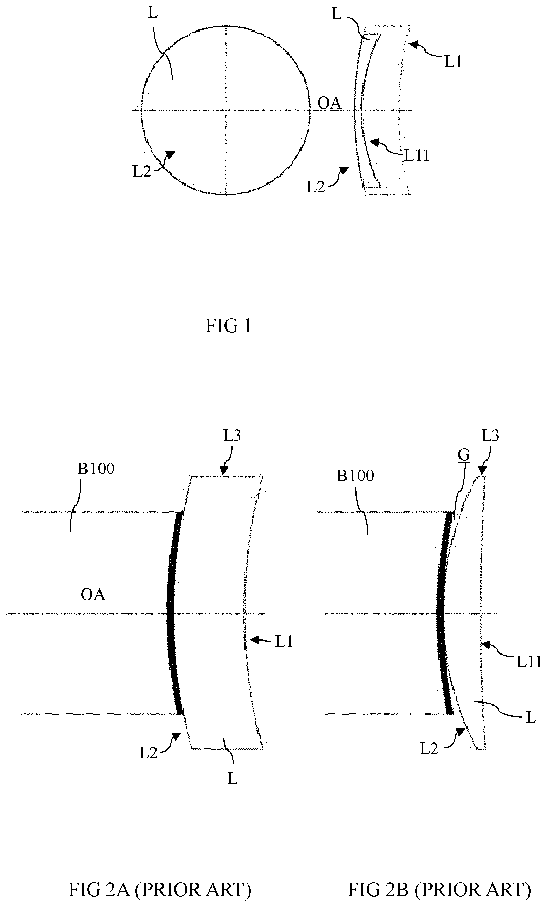

For example, if inner tensions exist in an unprocessed lens blank, initially, they are evenly distributed over the entire thickness of the raw lens blank and thus, do not have any or have only a very small impact on the shape of the lens blank. However, during the machining process, material is removed in parts of the lens blank while other parts are not processed yet. Accordingly, tensions inside the processed lens blank are unevenly distributed and thus, can generate deformations in the lens shape. Consequently, at the end of the machining process, the final shape of the lens' front surface will differ from the original shape, which -as described above- was used initially for determining the processing steps of the rear surface. Thus, a power map error results because the desired power map is based on the (initial) shape of the front surface of the blank and not on the (deformed) shape of the finished lens. Figures 2 illustrate this situation exemplarily by showing the shape of a lens (L) before starting a surface processing step (Figure 2A) and the shape of the lens (L) at the end of the surface processing step (Figure 2B). Ideally, the front surface (L2) would remain the same throughout the process while only the shape of the rear surface (L1) changes from its original shape (L1) to the new shape (L11).

This may lead to the in Figures 2A and 2B exemplarily illustrated phenomena that at the beginning of the machining process of the lens' rear surface (L1), the lens blank (L) may match the shape of the deformable support block (B100) perfectly (see Figure 2A) while at the end of a processing step (see Figure 2B), not only the shape of the rear surface (L11) but also the shape of the front surface (L2) may have changed so that a gap (G) between the front surface (L2) of the lens (L) and the deformable support block (B100) exists. Thereby, the support capabilities of the deformable support block (B100) for the lens (L) during subsequent surface processing is reduced. This may lead to deformation of the front surface (L2) of the lens (L) through operating forces during machining of the rear surface of the lens blank (L1, L11). Also, lens holding forces generated with a suction pump can cause deformations.

Moreover, it has to be considered that deformable lens supports are commonly provided with a rubber coating to avoid scratching the already finished front surface of the lens blank. However, these rubber coatings may be subject to locally varying deformation under the effect of operating forces and/or clamping forces, thereby introducing flexibility and instability in the support of the lens blank during the machining process.

Accordingly, it is an object of the present invention to provide a part, system and method for processing a surface of a lens that overcome the known disadvantages of the prior art, respectively. Therein, it is a particular object of the invention to provide a rigid support for the front surface of the lens that is actively adaptable throughout the processing of the lens and that allows to connect and to disconnect the lens from the support with minimal effort. Therein, it is a particular object to provide a solution that is suitable for adjusting the lens support automatically and in a short time.

These and other objects, which become apparent upon reading the description, are solved by the subject-matter of the independent claims. The dependent claims refer to preferred embodiments of the invention.

### Summary of the invention

A first aspect of the present invention relates to a lens supporting part for supporting a lens in a surface machining process, in which one of two opposite side surfaces of the lens is processed. The lens supporting part comprises a plurality of support elements that are relatively moveable with respect to each other. The support elements form together a lens seat with a curvature for supporting the lens on its other side surface against forces caused in the surface machining process. The lens supporting part further comprises an adjustment mechanism for displacing at least some of the plurality of support elements relatively to each other during processing to adjust the curvature of the lens seat to a defined curvature independently from a lens being seated on the support elements.

In other words: the invention provides a lens supporting part that is suitable for being used in a surface machining process of a lens. The process may comprise, for example, any surfacing or manufacturing step(s) for the generation of optical devices, such as roughing (i.e. grinding of a lens surface to the approximate curvature and thickness), smoothing (i.e. grinding of a lens surface to the exact curvature and thickness), polishing (i.e. making the lens smooth; providing regular transmission as well as specular reflection) and/or bevelling (i.e. cutting the lens to the shape of eyeglass frames). Generally, a "lens" may be understood, for example, as any transmissive optical device that is adapted to change the course of light by refraction. For example, the lens may be an ophthalmologic lens, such as corrective or prescription lenses. The lens may have two opposite side surfaces and a circumferential edge. Preferably, one of the two side surfaces is processed (here referred to as *"*t*he one side surface*) while the other one of the two side surfaces of the lens (here referred to as "*the other side surface*) is supported by the lens supporting part.

The lens supporting part comprises a plurality of movable support elements that together form a lens seat. The lens seat, for instance, may be a structure that acts as a base or centre for a lens side surface during the surfacing process. For example, the support elements may be arranged and provided such that they contribute to parts or sections of a common surface or frame structure, which has a curvature. The expression "*curvature*" may be understood, for example, as a characteristic of a lens of having a (non-planar and/or) spherical contour in a normal section of the lens along its optical axis. Therein, the curvature may be a measure to determine the amount, by which a surface of the lens deviates from being a plane. For example, in lens manufacturing, curvature may be understood as the reciprocal of a radius of a circle that best fits a contour of the lens in a normal section of the lens along its optical axis (e.g. the section showing the lens optical profile) and/or as a mean curvature of one of its side surfaces.

The lens supporting part further comprises an adjustment mechanism that is capable of changing the position of at least one or more of the support elements relatively to each other such that the curvature of the lens seat can be adapted to a desired new defined curvature. Therein, "*defined curvature*" may be understood, for example, as specifying the profile and/or contour of the lens seat (e.g. when seen in a normal section of the lens along its optical axis) such that a surface with a defined curvature radius (or mean curvature value) is constituted. Therein, the defined curvature may be different from an initial (starting-)curvature of the other side surface. The "*adjustment mechanism*" may be understood, for example, as a device, functional unit and/or functionally linked group of components; which may actively manipulate or allow to manipulate the respective support elements relatively to each other during processing to adjust the curvature of the lens seat to a defined curvature independently from a lens being seated on the support elements.

This capability of the adjustment mechanism is neither restricted by a lens being attached to or supported/seated on the lens seat nor dependent on that a lens is attached to or supported/seated on the lens seat.

Thereby, it is possible to actively adapt the curvature of the lens seat, which supports the lens against mechanical stresses during a surface machining process, even during an ongoing machining process as the curvature of the lens seat can be adjusted even when the lens is seated on the lens seat. Thereby, it is possible to tailor the curvature of the lens seat not only to the initial curvature of the front surface of the lens but also to adapt the curvature of the lens seat in anticipation of upcoming and ongoing mechanical stresses during the surface processing as well as of a changing thickness profile of the lens. An adjustment of the curvature can be achieved within the required accuracy levels. For example, in lens manufacturing applications there may be a requirement that new relative positions of support elements can be set with an accuracy of 1 micrometre or below. Thereby, it is possible to provide the lens with excellent support during the entire manufacturing process so that the quality and accuracy of the finished lens can be improved while power errors can be reduced or avoided.

Thus, the known problems and disadvantages of the prior art can be overcome with the lens supporting part of the present invention.

According to a preferred embodiment of the invention, the adjustment mechanism may be configured to move at least some (or all) of the plurality of support elements independently from each other to obtain the defined curvature. Alternatively or additionally, the adjustment mechanism may be configured such that at least one (or preferably all) of the support elements may be relatively movable to a lens being seated on the support elements. The support element(s) may be freely movable between a position, where (one of) the support element(s) is without direct contact with the other side surface of said lens, and a position, where the support element is in direct contact with the other side surface of said lens.

Thereby, the position of each of the support elements with respect to the lens being seated on the lens seat can be set freely. Thus, numerous different configurations of the support elements with respect to each other and the lens can be defined. Accordingly, numerous curvatures of the lens seat can be formed so that the lens can be mechanically supported by the support elements throughout the surface machining process in different configurations. Thus, with such configuration, the lens is less susceptible to mechanical stresses and deformations during the manufacturing process so that the initial shape of the other side surface can be maintained. Thereby, an improvement of the quality and accuracy of the finished lens can be accomplished.

According to a further preferred embodiment of the invention, the adjustment mechanism may be configured to move (e.g. slide) the respective support elements in a direction, which may be transverse (e.g. orthogonal) to the lens seat to adjust the curvature of the lens seat. Alternatively or additionally, the movement may be in a direction that is parallel to a holding force for holding the lens on the lens supporting part to adjust the curvature of the lens seat. Preferably, the support elements and/or the adjustment mechanism may be connectable to a component for actuating at least one support element and/or each of the support elements to be moved. Preferably, such actuation may be configured to actively adjust the curvature of the lens seat. More preferred, the adjustment mechanism may be connectable to at least one actuator, preferably to actuate (e.g. move or displace) the respective support element to be moved.

Thereby, the curvature can be adjusted more accurately and the lens can be supported more effectively as the support elements are movable in directions that correspond with directions of holding forces and machining forces, which have a high impact on affecting the other side surface of the lens during the surface machining process. Hence, the quality of the finished lens can be improved.

According to a preferred embodiment of the invention, the support elements may each have a distal end. Preferably, all (or at least some) distal ends together may form the lens seat. The distal ends may each comprise or are made of an elastic material for supporting the lens. Alternatively or additionally, the support elements may each extend along a longitudinal axis. Preferably, the support elements may extend between the distal end and a proximal end. Preferably, the proximal end may be suitable for being coupled to the adjustment mechanism.

Thereby, the other side surface of the lens can be protected from being scratched or otherwise damaged during the surface machining process. Moreover, the adjustment mechanism can be connected easily with the supporting elements.

According to a further preferred embodiment of the invention, at least one of the support elements may form an outer circumferential sealing edge of the lens seat to allow for a circumferential sealing of a lens being seated on the lens seat. Preferably, the outer circumferential sealing edge may be provided at its distal end. Preferably, the at least one support element, which forms the outer circumferential sealing edge, may be (provided) stationary and/or fixed relatively to other support elements and/or relatively to a lens being seated on the support elements.

By providing sealing on an outer face of the structure formed by the support elements, it is possible to seal a space between the support elements and the other side surface of the lens from the outside. Thus, accidental damage of the other side surface of the lens through coolant or material removed in the process can be averted. By providing the outer circumferential sealing edge immovable, it is possible to use the respective support element (forming the outer circumferential sealing edge) as a reference edge for positioning and arranging the lens on the lens supporting part. Thereby, manufacturing of the lens as well as the quality of the finished lens can be improved.

According to a preferred embodiment of the invention, the lens supporting part may further comprise a vacuum unit. The vacuum unit may also be part of the system described herein below, which then functions the same way. The vacuum unit may be fluidly connected to the lens seat. Alternatively or additionally, the lens seat may be configured to be fluidly connectable to a/the vacuum unit to apply a vacuum in a suction space between the lens seat and a lens being seated on the lens seat. Preferably, the vacuum unit and/or the fluid connection may be provided for creating a holding force for holding the lens on the lens seat upon a vacuum being applied. Vacuum passages may be formed between at least some of the support elements for connecting the vacuum unit with the suction space (and/or with the lens seat).

Thereby, a space with air pressure below atmospheric pressure can be generated between the lens and the lens supporting part. This allows to secure and/or fix the lens to the lens supporting part by (active) force application so that it is possible to reversibly connect and disconnect the lens from the lens supporting part. In particular, it is no longer necessary to block and to de-block the lens at the beginning or the end of the lens manufacturing process. Thus, the above configuration facilitates automated processing of lenses with high throughput rates. By applying the suction force or vacuum through preferably evenly spread passages, deformation of the other side surface of the lens during processing can be avoided. Moreover, it is possible to adapt the strength of the holding force locally so that deformations caused by holding forces can be minimized.

According to a preferred embodiment of the invention, the adjustment mechanism may comprise at least one actuator, such as an electric motor or pneumatic cylinder. Preferably, the actuator may be suitable and/or configured for displacing the support elements relatively to each other. The actuator may also be part of the system described herein below, which then functions the same way; then the adjustment mechanism may be configured to be connectable to (e.g. the) at least one actuator. Moreover, the adjustment mechanism may comprise a blocking part that is movable between a first position, where the support elements are fixed in their relative position to each other (and preferably to a lens being seated on the lens seat), and a second position, where the support elements are relatively movable with respect to each other (and preferably to a lens being seated on the lens seat). For example, the blocking part may be a movable clamp.

Thereby, the support elements can be actively moved between different positions and can be fixed in different positions so that the curvature of the lens seat can be varied and provided with sufficient rigidity in each of the different arrangements of the support elements.

Preferably, the actuator may be controllable and/or comprise a sensor unit, such as an encoder, for determining positional information, e.g. a relative position of the actuator.

Thereby, it is possible to provide the lens supporting part with a closed loop control as the positional information can be used to check and verify a position of a support element. In case of deviations between a desired and actual position, it is possible to adjust (actively) the position of the respective support element.

According to a further preferred embodiment of the invention, the support elements may be formed and/or arranged in a ring shape. Preferably, the support elements may be rings having a plurality of (differing) ring diameters and/or maybe coaxially arranged to form the lens seat.

Thereby, the support elements can be provided as simple structures that could correspond with a spherical shape of a lens. Also, the support elements can be arranged concentrically so that the curvature of a sphere can be mirrored with high precision. Therein, the lens can be arranged such that its optical axis may correspond with the common centre of the ring arrangement. Hence, accuracy and precision, by which the curvature of the lens seat can be adapted with respect to the lens seated on the lens seat, can be improved. Also, the number of parts can be reduced as each ring forms a circumferential section of the lens seat, which reduces structural and control complexity.

According to a preferred embodiment of the invention, the adjustment mechanism may further comprise (for each of the support elements to be moved) a connecting mechanism to (directly or indirectly) transmit (or transfer) an actuation force of an actuator to the respective support element. Preferably, the actuation force may be transferred such that said support element is linearly moved. The actuator may be the already mentioned actuator or a different actuator.

Thereby, it is possible to displace the individual support elements with respect to each other with simple and highly effective technical means. Also, it is possible to introduce additional stiffness into the system so that the rigidity of the lens seat is improved, thereby improving the support provided to the lens against mechanical stresses during the manufacturing process. Moreover, the individual support elements can be moved with high accuracy and precision.

According to a preferred embodiment of the invention, at least one (or preferably all) of the support elements may be made of a rigid material, such as metal or plastic material, which preferably has a tensile stiffness between 150 MPa and 250 MPa.

Alternatively or additionally, at least one (or preferably all) of the support elements may comprise or be made of a material with a surface hardness that ranges between a surface hardness found with hard plastic and the one found with hardened steel.

For example, a hard plastic material may have a surface hardness ranging from 40 to 100 ShD, preferably 60 to 70 ShD. Therein, the surface hardness of rubber and plastic is quantified with the Shore-scale (commonly used unit abbreviations: ShA and ShD), which is defined in industrial norms, such as ASTM D2240. In comparison, hardened steel may have a surface hardness ranging from 50 HRC to 70 HRC, preferably 62 HRC.

Therein, the surface hardness is quantified with the Rockwell scale (HRC), which is defined in industrial norms, such as ISO 6508.

Preferably, the distal end of (each of) the support elements may comprise or be made of an elastic material for supporting the lens. For example, rubber may be used. Preferably, the elastic material may be provided as a coating or a separate element that is fixable to each of the distal ends. Alternatively or additionally, it is also conceivable that a single cover element may be provided for covering each of the distal ends. Preferably, the material used for covering or coating the distal ends of the support elements may have a surface hardness that ranges between a surface hardness found with soft rubber and the one found with soft plastic. Preferably, the surface hardness of soft rubber may be 40 ShA to 100 ShA, preferably 50 ShA to 60 ShA. The surface hardness of soft plastic may be 40 ShD to 100 ShD, preferably 60 ShD to 70ShD.

Thereby, the support elements are provided with high rigidity so that the support elements can act as a rigid wall for the lens during the surface machining process. Also, the resistance to vibrations can be improved.

In a further preferred embodiment of the present invention, the adjustment mechanism may be configured such that - during processing - at least some of the plurality of support elements are displaceable relatively to each other to adjust the curvature of the lens seat to a (new) defined curvature independently from a lens being seated on the support elements.

In a preferred embodiment of the present invention, the lens supporting part may be configured such that at least some of the support elements and/or the adjustment mechanism is/are (actively) controllable by a control unit (e.g. through the adjustment mechanism).

In a further preferred embodiment of the present invention, the adjustment mechanism may be configured to displace - during processing - at least some of the plurality of support elements relatively to each other to a defined curvature and/or to a curvature that is defined by a control unit, preferably such that the curvature of the lens seat may change during processing. Preferably, the control unit may be (functionally) connected to the adjustment mechanism preferably so that the adjustment mechanism converts a control signal from the control unit into relative displacement of the support elements. Preferably, the adjustment mechanism may comprise the control unit. Alternatively or additionally, the control unit may be configured to send a control command to an (or each of the) actuator(s) (preferably of the adjustment mechanism) that may convert the command into an (corresponding) actuation of the actuator. Preferably, the control unit may comprise anyone of the features of a control unit of a system described below.

Thereby, it is possible to provide a lens supporting part that is actively controlled so that the curvature of the seat for supporting the lens during processing can be adjusted during processing. Thus, unlike in the solutions of the prior art, where the seat can be adjusted only once before the start of the processing, with the above configuration the curvature can be adjusted continuously.

A further aspect of the invention relates to a system for surface processing of at least one of two opposite side surfaces of a lens. The system comprises a lens supporting part for supporting the lens during the surface machining process as described above. The system further comprises a surface processing unit for processing the one side surface of the lens. For example, the surface processing unit may be a lens cutting or lens polishing device. The system also comprises a surface information supply unit for supplying a geometry of the other side surface of the lens. The surface information supply unit may be a camera, a pressure sensor or a laser sensor, for example, for identifying the geometry of the other side surface of the lens. Alternatively or additionally, the surface information supply unit may be, for example, an interface to a database. The system further comprises a control unit for determining and setting a defined curvature of the lens seat based on the supplied geometry of the other side surface of the lens and for controlling the adjustment mechanism to displace the support elements relative to each other to obtain the defined curvature of the lens seat.

Preferably, the surface information supply unit may be a (digital) database that, for example, may be stored on the control unit. For example, the geometry of the other side surface may be stored in a memory of the control unit as a look-up table. The lens curvature of the other side surface may be stored in a database as an information. The information stored in the database may be a measured value (e.g. identified by a sensor) or may be a value coming from the manufacturer's database. The supplied geometry may comprise actual/measured values and/or may comprise corrected values, such as, for example, a (pre-) compensated values with the compensation amount being based on measured values. Preferably, the information (geometry, data) from the information supply unit may be supplied (provided or transferred) to the control unit through a data connection, e.g. a wire or soldering. For example, the operator may scan at the begin of processing a barcode on the lens blank and derive corresponding information from the surface information supply unit on the geometry of the other side surface of the lens blank based on the barcode information.

Preferably, the control unit may be configured to determine a (target) position for each of the support elements before and/or during processing based on the information (i.e. the geometry) supplied by the surface information supply unit. For example, an algorithm may be executed on the control unit in order to determine such positions. Therein, for example, while not being excluded, the algorithm may be configured such that positions for the support elements are returned that may be different from positions that lead to replicating the curvature of the other side surface of the lens. Preferably, the control unit may control the adjustment mechanism to adjust the position of the respective support elements (with respect to each other and/or with respect to a lens being seated on the lens seat).

The system comprises all advantages and benefits that were described in detail above. In particular, by supplying the geometry of the other side surface of the lens, for example by measurement or through a database, it is possible to adapt the support of the lens based on the actual (real/measureable) shape of the other side surface of the lens in a state, when the lens is not being subjected to any external forces, such as holding or machining forces. Moreover, the geometry (e.g. dimensions, contours, parameters and/or functions describing the shape/geometrical characteristics of the other side surface) can be used to calculate and/or establish how the adjustment mechanism is to be controlled in order to obtain a desired curvature by displacing the (at least some of the) support elements. Thus, it is possible to take geometrical peculiarities of the lens into consideration so that a desired shape of the lens can be obtained with high precision and quality since the structure supporting the lens can be adapted in accordance with the actual shape of the lens. Thus, unlike in the prior art, it is not necessary to accept that power errors, which result from imperfections of the other side surface of the lens, inevitably exist. Instead, these initial faults of the lens blanks can be detected and corrected by adapting the processing of the one side surface.

According to a preferred embodiment of the invention, the control unit may be configured to (continuously) determine and set the defined curvature of the lens seat. Preferably, determining and setting the defined curvature may be based on detected process parameters, like mechanical stresses occurring during a processing step, and/or a desired shape for the finished lens.

Thereby, it is possible to actively adapt the curvature of the lens seat depending on a momentary (actual) state of the lens so that consistent support can be provided.

According to a further preferred embodiment of the invention, the system may further comprise a spindle for rotating the lens supporting part during the surface machining process. Preferably, the lens supporting part and the spindle may be arranged coaxially. Additionally or alternatively, the lens supporting part and the spindle may be detachably coupled to each other.

Thereby, it is possible to rotate the lens relatively to the surface processing unit so that the production of the lens can be achieved with conventional lens manufacturing machinery. Moreover, the lens supporting part can be coupled and decoupled from the spindle so that it is possible to use the lens supporting part as well as the system of the invention in an already existing lens manufacturing environment.

As already mentioned herein above, the above-mentioned actuator(s) and/or vacuum unit may be part of the system with the functions and advantages as described before.

A further aspect of the invention relates to a method for surface processing at least one of two opposite side surfaces of a lens. The method comprises the step of providing the above described system for surface processing at least one of two opposite side surfaces of a lens. A geometry of the other side surface of the lens is supplied (e.g. provided with the surface information supply unit). A defined curvature of the lens seat is determined and set based on the supplied geometry of the other side surface of the lens (e.g. with the control unit). The curvature of the lens seat is adjusted independently from a lens being seated thereon to obtain the defined curvature of the lens seat (e.g. with the adjustment mechanism and/or during processing). The lens is supported with its other side surface on the lens seat through (by) its defined curvature. The at least one side surface of the lens is processed to a desired shape (e.g. with the surface processing unit).

Preferably, the lens may be attached to the lens seat by activating a suction force or vacuum as a holding force (e.g. with a or the vacuum unit). More preferred, the lens may be centred on the lens seat. According to a preferred embodiment of the invention, during the processing step, the defined curvature of the lens seat may be continuously determined, set and/or adjusted. For example, the defined curvature of the lens seat may be continuously determined and set based on detected process parameters. Process parameter may be mechanical stresses occurring during a processing step, positional information determined by sensors of the actuators, and/or a desired shape for the finished lens. Preferably, the defined curvature may be determined and set (e.g. based on one or all of these process parameters) such that a curvature of the other side surface of the lens at the beginning of the processing is maintained. The curvature of the lens seat may be adjusted independently from the lens being seated thereon to obtain the defined curvature of the lens seat.

With such configurations of the method, it is possible to achieve all advantages and benefits of the invention that were described in detail above. Also, it is possible to improve the quality and accuracy of the lens generated in the surface machining process.

According to a further preferred embodiment of the invention, the processing step may comprise a lens surface rough cutting step. In the lens surface rough cutting step, the lens may be secured on both side surfaces between the lens supporting part and an additional holding device. The additional holding device may preferably be arranged opposite of the lens supporting part with respect to the lens (seated on the lens seat). Preferably, a finishing step may exist, where the lens is secured only by the lens supporting part.

Thereby, additional support is provided to the lens during a processing step, in which cutting forces are at a high level. Thus, it can be ensured that the lens is well supported on the lens support part and that machining forces are counteracted by the lens support.

Further aspects of the present invention relate to a (ophthalmologic) lens produced with the method of the invention and a use of the system for producing a (ophthalmologic) lens.

### Brief description of drawings

Further features, advantages and objects of the invention will become apparent for the skilled person when reading the following detailed description of embodiments of the invention and when taking in conjunction with the figures of the enclosed drawings.

In case numerals were omitted from a figure, for example for reasons of clarity, the corresponding features may still be present in the figure.
- **Figure 1**: shows schematically a lens in a front view and a side view in the beginning and the end of surface processing.
- **Figure 2A**: shows schematically a side view of the connection between a lens and a surfacing block of the prior art at the beginning of a surface machining process.
- **Figure 2B**: shows schematically a side view of the connection between a lens and a surfacing block of the prior art at the end of a surface machining process.
- **Figure 3**: shows schematically an embodiment of a lens supporting part according to the present invention.
- **Figure 4**: shows schematically an embodiment of a system of the present invention with a simplified illustration of a further embodiment of the lens supporting part according to the present invention.

### Detailed description

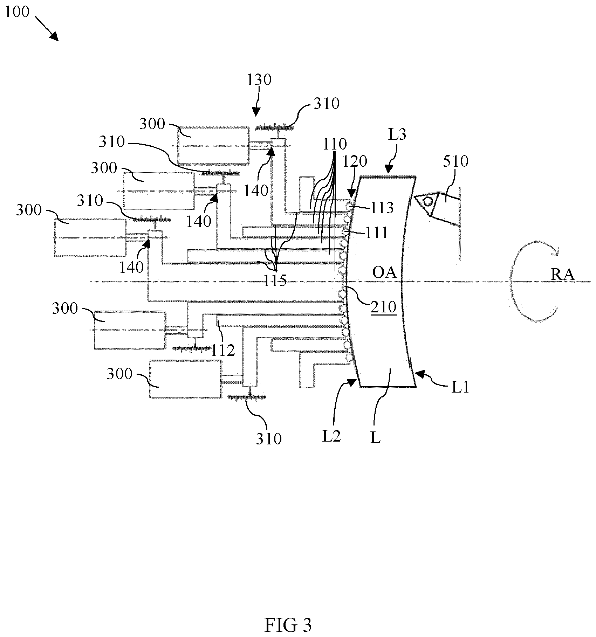

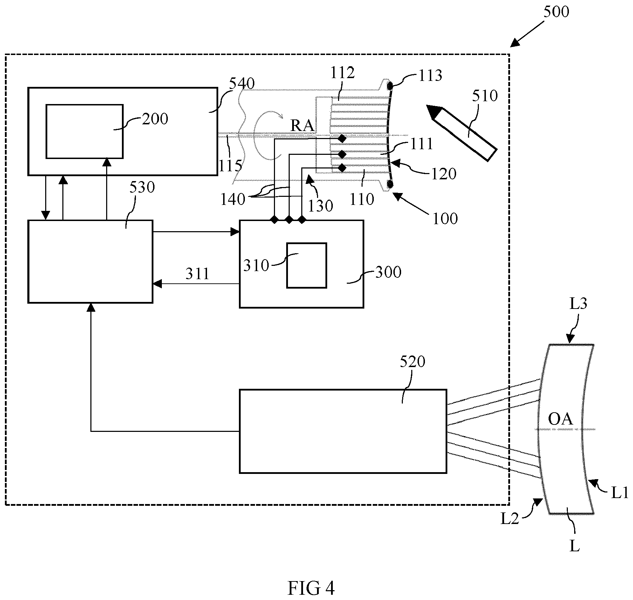

Figure 1 shows exemplary profiles of a lens L at the beginning and the end of a surface machining process. Figures 2A and 2B illustrate known challenges that exist in connecting a lens L with a support block B100 known from the prior art and that were described in more detail above. Figures 3 and 4 show different aspects of different embodiments of the present invention.

For instance, a first aspect of the invention relates to a lens supporting part 100 according to the invention. Embodiments of the lens supporting part 100 are illustrated in Figures 3 and 4. The lens supporting part 100 is suitable for supporting lens L in a surface machining process. For example, the lens supporting part 100 may be a jig, a chuck, a workpiece holder, and/or an adapter suitable to be used in a lens surfacing process.

The lens L comprises two opposite side surfaces L1, L2. This is exemplarily illustrated in all Figures. In the surface machining process, one side surface L1 of the lens L is to be processed. At the end of the processing, the lens L may have a newly shaped one side surface L11. This is exemplarily illustrated in Figure 1. Preferably, the lens L may comprise a circumferential edge L3 that extends between the two side surfaces L1, L2. Preferably, the lens L may be made of a transparent and/or translucent material, e.g. a plastic material, such as polycarbonate, or glass. More preferred, the lens L may be a lens blank. Preferably, one side surface of the lens blank (e.g. its back surface) may be used for customization in a surface machining process while the other side surface of the lens blank (e.g. its front surface) may be already in its finished state, i.e. may comprise already its intended curvature and may be already polished. The lens L may comprises a coating for polarisation or light blocking. However, this is only an example and the lens L may be a lens blank with both side surfaces requiring surface processing. The lens L may comprise side surfaces L1, L2 that may be convex and/or concave. The lens L may comprise an optical axis OA that may be a normal of a symmetry plane of the lens L. The lens L may comprise spherically shaped side surfaces L1, L11, L2. It is also conceivable that the lens L has more than one optical axis or differently shaped side surfaces L1-L2.

The lens supporting part 100 comprises a plurality of support elements 110. In Figures 3 and 4, the lens supporting part 100 is exemplarily illustrated with six support elements 110. However, this is only an example and the lens supporting part 100 may comprise any number of support elements 110 greater or equal than two. Preferably, the support elements 110 may each extend along a longitudinal axis. Moreover, (each or some of) the support elements 110 may preferably extend between a distal end 111 and a proximal end 112. This is exemplarily illustrated in Figures 3 and 4. The support elements 110 may have a ring shape. For example, the support elements 110 may be long hollow shafts. Each of the ring-shaped support elements 110 may have a different diameter and may be arranged coaxially as exemplarily illustrated in Figures 3 and 4. However, this is only an example and the support elements 110 may have various shapes and maybe arranged differently. For instance, the support elements 110 may be slats or plates that preferably they may be arranged in a circle such that they all are directed towards a common centre. Preferably, at least one (or all) of the support elements 110 may be made of a rigid material, such as metal (e.g. stainless steel) or a hard plastic. The support elements 110 may have a tensile stiffness between 150 MPa and 250 MPa. Preferably, material(s) used for the support elements 110 may have a surface hardness in the range between surface harnesses found with hard steel (e.g. 62 HRC) and hard plastic material (e.g. 60-70 ShD).

Moreover, the support elements 110 may each have their distal end 111 made of an elastic material for supporting and/or contacting the lens L. For example, a material with a surface hardness ranging between the surface hardness found for soft rubber (e.g. 60 ShA) and soft plastic material (e.g. 60-70 ShD) may be used for the distal end 111. For example, the support elements 110 may have a rubber coating or gasket provided on their respective distal end 111 to avoid scratching the other side surface L2 when the support elements 110 come into contact with the lens L as exemplarily illustrated in Figures 3 and 4.

The support elements 110 are relatively moveable with respect to each other. Moreover, the support elements 110 form together a lens seat 120 with a curvature for supporting the lens L on its other side surface L2 against forces caused in the surface machining process. Preferably, each of the distal ends 111 together may form the lens seat 120. Figures 3 and 4 illustrate exemplarily that by increasing the number of support elements 110 it may be possible to increase the resolution for forming the curvature of the lens seat 120. In Figures 3 and 4, the lens seat 120 is exemplarily shown with a convex shaped surface that is formed by the distal ends 111 of the support elements 110. Each of the support elements 110 may be provided relatively movable to the lens L when the lens L is seated on the support elements 110.

At least one of the support elements 110 may preferably form at its distal end 111 an outer circumferential sealing edge 113 of the lens seat 120. For example, the circumferential sealing edge 113 maybe a (rubber) gasket, such as an O-ring. The circumferential sealing edge 113 may allow for a circumferential sealing of the lens L being seated on the lens seat 120 as exemplarily illustrated in Figure 3. Preferably, the support element 110 that forms the outer circumferential sealing edge 113 may be fixed relatively to other support elements 110 and preferably also to the lens L when being seated on the support elements 110. This is shown by way of example in Figures 3 and 4.

Preferably, the support element(s) 110 that form(s) the outer circumferential sealing edge 113 may form a main body of the lens supporting part 100. However, the main body may be formed by a separate component instead. For example, the main body may be a cartridge or a container. The main body may be arranged to be coupled to a machine or system for surface processing. Preferably, the support elements 110 may be arranged inside the main body around a common axis. Therein, the support elements 110 may be preferably arranged such that for processing they may be brought in alignment with a rotational axis RA of a machine spindle (e.g. later described spindle 540). Figures 3 and 4 indicate this exemplarily. Preferably, the lens L may be arranged on the lens seat 120 such that its optical axis is aligned with the rotational axis RA.

Preferably, the lens supporting part 100 may further comprise a vacuum unit 200. The vacuum unit 200 may be a vacuum ejector, a displacement or kinetic vacuum pump, for example. In Figure 4, the vacuum unit 200 is exemplarily displayed as part of a system 500, which will be described in more detail below. The vacuum unit 200 may be fluidly connected /connectable to the lens seat 120 to apply a vacuum in a suction space 210 between the lens seat 120 and the lens L being seated on the lens seat 120. This is exemplarily illustrated in Figure 3. With the vacuum unit 200, a holding force for holding (and/or securing) the lens L on the lens seat 120 may be created. Therein, the lens supporting part 100 may comprise at least one vacuum passage 115 for connecting the vacuum unit 200 with the lens seat 120 and the suction space 210. In Figure 3, the vacuum passages 115 are exemplarily shown as being formed between at least some of the support elements 110 for connecting the vacuum unit 200 with the lens seat 120. Therein, the support elements 110 may be arranged with a small gap between each other. In Figure 4, the vacuum passage 115 is exemplarily shown as a single duct that leads to the centre of the lens seat 120 and that may be provided as a through hole in one of the support elements 110.

The lens supporting part 100 further comprises an adjustment mechanism 130 for displacing at least some of the plurality of support elements 110 relatively to each other during processing to adjust the curvature of the lens seat 120 to a defined curvature independently from a lens L being seated on the support elements 110. The adjustment mechanism 130 is exemplarily illustrated in Figures 3 and 4. Preferably, the adjustment mechanism 130 may be configured to move at least some of the plurality of support elements 110 independently from each other to obtain the defined curvature.

The support elements 110 may be coupled to the adjustment mechanism 130 via their proximal ends 112. Therein, for example, the adjustment mechanism 130 may comprise a connecting mechanism 140. For example, the connecting mechanism 140 may (mechanically and/or electrically) link the support element 110 with the adjustment mechanism 130. For instance, the connecting mechanism 140 may convert or transfer an actuation (e.g. a control motion or a force) of the adjustment mechanism 130 to the (individual) support elements 110. The connecting mechanism 140 may define the kinematics between the adjustment mechanism 130 and the support element 110. The connecting mechanism 140 is exemplarily illustrated in Figures 3 and 4 as connecting portion between the support elements 110 and corresponding actuators 300 for displacing, e.g. during processing, at least some of the support elements 110. Preferably, each of the support elements 110 may be displaced through the connecting mechanism 140 directly/indirectly transmitting an actuation force of the actuators 300 to the corresponding support element 110, e.g. so that the respective support element 110 may be linearly moved. For example, in one of its simplest configurations, the connecting mechanism 140 may be a mechanical connection, such as a screw connection, between the adjustment mechanism 130 and the respective support element 110.

As mentioned above, the adjustment mechanism 130 or the system 500 may comprise at least one actuator 300. In general, the actuator 300 may be a component that is configured to (actively) generate a (mechanical or electrical) force for actuating (i.e. displacing, for example, in a controlled/defined manner) the support elements 110 (to be moved). Therein, the actuator 300 may be a different component depending, for example, on the design of the adjustment mechanism 130 and/or the connecting mechanism 140. Preferably, at least one actuator 300 may be provided for each of the support elements 110 that is to be displaced during the surface machining process. The actuator 300 may be an electric motor, such as illustrated in Figures 3 and 4, or it may be a pneumatic cylinder or a piezo motor. However, it is also conceivable that the actuator 300 may be a mechanical break or an eddy current break. These are only examples and do not represent a complete enumeration. Preferably, the actuator 300 may be controllable, for example by a computational unit or machine control unit (such as later described control unit 530). The actuator 300 may comprise a sensor unit 310 for determining positional information, such as a relative position of the actuator 300 with respect to the lens L or with respect to the outer circumferential sealing edge 113. For example, the actuator 300 may be battery powered and/or may be controllable through a wireless receiver for receiving control commands from the machine control unit. The actuator(s) 300 may be arranged relatively movable and/or static (i.e. fixed/immovable) relative to the support elements 110 preferably in operation.

Preferably, the adjustment mechanism 130 may be configured to move the respective support elements 110 in a direction, which is transverse (e.g. orthogonal) to the lens seat 120, in order to adjust the curvature of the lens seat 120. In the examples illustrated in Figures 3 and 4, the adjustment mechanism 130 is configured to move the respective support elements 110 in a direction parallel to the holding force for holding the lens L on the lens supporting part 100, which is generated by the vacuum unit 200. Preferably, the adjustment mechanism 130 and/or the support elements 110 may be configured to slide.

The adjustment mechanism 130 may be configured to temporarily block (freeze) the movement of the support elements 110. Therein, the adjustment mechanism 130 may comprise a blocking part that may be movable between a first position, where the support elements 110 are fixed in their relative position to each other (and preferably also to the lens L when being seated on the lens seat 120), and a second position, where the support elements 110 are relatively movable with respect to each other (and preferably also to the seated lens L). Preferably, the blocking part may be a movable clamp. Alternatively, it is also conceivable that the actuators 300 block any further movement of the support elements 110 without receiving a corresponding control signal.

A further aspect of the present invention relates to a system 500 for surface processing at least one of the two opposite side surfaces L1, L2 of the lens L. The system 500 is exemplarily illustrated in Figure 4. For example, the system 500 may be a machine for surface processing of lenses.

The system 500 comprises the lens supporting part 100 as described above. Unlike in Figure 3, the actuators 300 may be provided as part of the system 500. However, this is only an example.

Furthermore, the system 500 comprises a surface processing unit 510 for processing at least the one side surface L1 of the lens L. For example, the surface processing unit 510 may be a drill, a lens cutting or a lens polishing device. In Figures 3 and 4, the surface processing unit 510 is exemplarily illustrated as a tool bit. However, this is only an example and other tools for roughing, polishing, surfacing can be used instead.

The system 500 further comprises a surface information supply unit 520 for supplying a geometry of at least the other side surface L2 of the lens L. The surface information supply unit 520 may be a camera, a pressure sensor or a laser sensor. However, it is also conceivable that the surface information supply unit 520 may be a database or an interface, such as a connector or data link, to a database. Preferably, the surface information supply unit 520 may be a contactless sensor such as exemplarily illustrated in Figure 4. The surface information supply unit 520 may be arranged outside of or (e.g. integrally provided) within the lens supporting part 100.

The system 500 further comprises a (preferably "the" aforementioned) control unit 530 for determining and setting a defined curvature of the lens seat 120 based on the supplied geometry of the other side surface L2 of the lens L and for controlling the adjustment mechanism 130 to displace the support elements 110 relative to each other to obtain the defined curvature of the lens seat 120. For example, the control unit 530 may be a machine control device as exemplarily illustrated in Figure 4. However, it is also conceivable that the control unit 530 may be part of the control unit of one of the actuators 300 (e.g. a servomotor). For example, the control unit 530 may comprise the surface information supply unit 520, e.g. the surface information supply unit 520 may be the memory of the control unit 530 or it may be mounted on the control unit 530.

Preferably, the control unit 530 may be configured to (continuously) determine and set the defined curvature of the lens seat 120. For this, the control unit 530 may comprise signal connections that connect the individual components of the system 500 with the control unit 530. This is exemplarily illustrated in Figure 4. For example, the actuator 300 may transmit to the control unit 530 positional information 311 that is determined by the sensor unit 310 of the actuator 300 or by a separate sensor provided in the system 500. Further, the control unit 530 may be configured to set and adapt the level and/or application location of the suction force or vacuum created by the vacuum unit 200. Also, the control unit 530 may be configured to (continuously) determine and set the defined curvature of the lens seat 120 based on the (so) detected process parameters, but also on mechanical stresses occurring during a processing step and/or a desired shape for the finished lens L. Therefore, the control unit 530 may be connected to the surface information supply unit 520, e.g. via a signal connection.

Preferably, the system 500 may further comprise a spindle 540 for rotating the lens supporting part 100 during the surface machining process along the rotational axis RA. This is exemplarily illustrated in Figure 4 but also indicated in Figure 3. The lens supporting part 100 may be part of the spindle 540. Alternatively, the lens supporting part 100 may be arranged coaxially and is detachably coupled thereto as exemplarily illustrated in Figure 4. The control unit 530 may be connected to the spindle 540, e.g. via a signal connection, to control and set the rotational speed during surface processing.

A further aspect of the present invention relates to a method for surface processing at least one of the two opposite side surfaces L1, L2 of the lens L.

The method comprises a step, in which the above described system 500 is provided to facilitate surface processing at least one of the two opposite side surfaces L1, L2. A geometry of at least one of the two side surfaces L1, L2 of the lens L is supplied preferably with the surface information supply unit 520. Based on the so supplied geometry of the respective side surface L1, L2, a defined curvature of the lens seat 120 is determined and set, preferably by the control unit 530. The curvature of the lens seat 120 is adjusted (e.g. during processing) independently from the lens L being seated thereon to obtain the defined curvature of the lens seat 120, preferably by the adjustment mechanism 130. The lens L is supported on the lens seat 120 with its defined curvature at the side surface L1, L2 that is not processed.

The lens L may be attached to the lens seat 120 by activating a suction force or vacuum as a holding force, preferably with the vacuum unit 200. Preferably, when attaching the lens L on the lens seat 120, the lens L may be centred on the lens seat 120 through the suction force or vacuum pulling the lens L onto the outer circumferential sealing edge 113 into the right position. For example, the lens seat 120 may be provided with structures of a self-centring mechanism for the lens L.

The at least one side surface of the lens L to be processed is processed to a desired shape, preferably with the surface processing unit 510.

Preferably, during the processing step, the defined curvature of the lens seat 120 may be continuously determined and set based on detected process parameters, like mechanical stresses occurring during the processing step, the positional information 311 determined by the sensor unit 310, and/or based on a desired shape for the finished lens L. For example, by setting the defined curvature the adjustment mechanism 130 may be (actively) controlled to displace at least some of the support elements 110 relatively to each other.

Preferably, the control unit 530 may be configured such that a curvature of the side surface L2 of the lens L (which is not to be processed) is maintained in its shape at the start of the processing. Alternatively or additionally, during the (still ongoing) processing step, the curvature of the lens seat 120 may be adjusted independently from the lens L being seated thereon to obtain the defined curvature of the lens seat 120. Therein, the processing step may comprise a lens surface rough cutting step, where the lens L is secured on both side surfaces L1, L2 between the lens supporting part 100 and an additional holding device (not illustrated). The additional holding device may be arranged opposite of the lens supporting part 100 with respect to the lens L seated thereon. For completeness and clarification purposes, reference is made to WO 2015 / 059007 A1, where an example for the additional holding device is provided. A subsequent finishing step may be part of the processing step, where the lens L is secured only by the lens supporting part 100, for example by applying a suction force or vacuum.

The invention is not limited by the embodiments as described hereinabove, as long as being covered by the appended claims. All the features of the embodiments described hereinabove can be combined in any possible way and be provided interchangeably.

## Claims

1. A lens supporting part (100) for supporting a lens (L) in a surface machining process, in which one (L1) of two opposite side surfaces (L1, L2) of the lens (L) is processed, wherein the lens supporting part (100) comprises
- a plurality of support elements (110) being relatively moveable with respect to each other and together forming a lens seat (120) with a curvature for supporting the lens (L) on its other side surface (L2) against forces caused in the surface machining process;
**characterized in that** the lens supporting part (100) further comprises
- an adjustment mechanism (130) for displacing at least some of the plurality of support elements (110) relatively to each other during processing to adjust the curvature of the lens seat (120) to a defined curvature independently from a lens (L) being seated on the support elements (110).

2. The lens supporting part (100) according to claim 1, wherein the adjustment mechanism (130) is configured to move at least some of the plurality of support elements (110) independently from each other to obtain the defined curvature, and/or
wherein the adjustment mechanism (130) is configured such that at least one, preferably each, of the support elements (110) is relatively movable to a lens (L) being seated on the support elements (110).

3. The lens supporting part (100) according to claim 1 or claim 2, wherein the adjustment mechanism (130) is configured to move, preferably slide, the respective support elements (110) in a direction, which is transverse, preferably orthogonal, to the lens seat (120) and/or that is a direction parallel to a holding force for holding the lens (L) on the lens supporting part (100), to adjust the curvature of the lens seat (120).

4. The lens supporting part (100) according to any one of claims 1 to 3, wherein the support elements (110) each have a distal end (111), preferably each of the distal ends (111) together forming the lens seat (120), wherein preferably the distal ends (111) each comprise or are made of an elastic material for supporting the lens (L) and/or wherein preferably the support elements (110) each extend, preferably along a longitudinal axis, between the distal end (111) and a proximal end (112) for being coupled to the adjustment mechanism (130).

5. The lens supporting part (100) according to any one of claims 1 to 4, wherein at least one of the support elements (110), preferably at its distal end (111), forms an outer circumferential sealing edge (113) of the lens seat (120) to allow for a circumferential sealing of a lens (L) being seated on the lens seat (120), wherein preferably the at least one support element (110) forming the outer circumferential sealing edge (113) is fixed relatively to other support elements (110) and/or to a lens (L) being seated on the support elements (110).

6. The lens supporting part (100) according to any one of claims 1 to 5, wherein the lens seat (120) is configured to be fluidly connectable to a vacuum unit (200) or the lens supporting part (100) further comprising a vacuum unit (200) that is fluidly connected to the lens seat (120) to apply a vacuum in a suction space (210) between the lens seat (120) and a lens (L) being seated on the lens seat (120), preferably for creating a holding force for holding the lens (L) on the lens seat (120), and wherein preferably vacuum passages (115) are formed between at least some of the support elements (110) for connecting the vacuum unit (200) with the lens seat (120) and preferably with the suction space (210).

7. The lens supporting part (100) according to any one of claims 1 to 6, wherein the adjustment mechanism (130) is configured to be connectable to at least one actuator (300) or wherein the adjustment mechanism (130) comprises at least one actuator (300), such as an electric motor or pneumatic cylinder, preferably for displacing the support elements (110) relatively to each other, and/or wherein the adjustment mechanism (130) comprises a blocking part that is movable between a first position, where the support elements (110) are fixed in their relative position to each other and preferably to a lens (L) being seated on the lens seat (120), and a second position, where the support elements (110) are relatively movable with respect to each other and preferably to a lens (L) being seated on the lens seat (120), wherein preferably the blocking part is a movable clamp.

8. The lens supporting part (100) according to any one of claims 1 to 7, wherein the adjustment mechanism (130) further comprises a connecting mechanism (140), preferably for each of the support elements (110) to be moved, to transmit, preferably directly or indirectly, an actuation force of an, preferably the, actuator (300) to the respective support element (110), preferably such that said support element (110) is linearly moved.

9. The lens supporting part (100) according to any one of claims 1 to 8, wherein the support elements (110) are formed and/or arranged in a ring shape, preferably with a plurality of ring diameters and more preferred coaxially arranged to form the lens seat (120).

10. A system (500) for surface processing of at least one of two opposite side surfaces (L1, L2) of a lens (L), comprising
- a lens supporting part (100) for supporting the lens (L) during the surface machining process according to any one of claims 1 to 9, and
- a surface processing unit (510) for processing the one side surface (L1) of the lens (L), such as a lens cutting or lens polishing device;
- a surface information supply unit (520) for supplying a geometry of the other side surface (L2) of the lens (L), such as a camera, a pressure sensor, a laser sensor or a database;
- a control unit (530) for determining and setting a defined curvature of the lens seat (120) based on the supplied geometry of the other side surface (L2) of the lens (L), and for controlling the adjustment mechanism (130) to displace the support elements (110) relative to each other to obtain the defined curvature of the lens seat (120).

11. The system (500) according to claim 10, wherein the control unit (530) is configured to preferably continuously determine and set the defined curvature of the lens seat (120) preferably further based on detected process parameters, like mechanical stresses occurring during the processing step, and/or a desired shape for the finished lens (L).

12. The system (500) according to claim 10 or claim 11, wherein the system (500) comprises a spindle (540) for rotating the lens supporting part (100) during the surface machining process, wherein the lens supporting part (100) and the spindle (540) are arranged coaxially and/or are detachably coupled to each other.

13. A method for surface processing at least one of two opposite side surfaces (L1, L2) of a lens (L), comprising:
- providing a system (500) for surface processing at least one of two opposite side surfaces (L1, L2) of a lens (L) according to any one of claims 10 to 12;
- supplying a geometry of the other side surface (L2) of the lens (L), preferably with the surface information supply unit (520);
- determining and setting a defined curvature of the lens seat (120) based on the supplied geometry of the other side surface (L2) of the lens (L), preferably with the control unit (530);
- adjusting the curvature of the lens seat (120) independently from a lens (L) being seated thereon to obtain the defined curvature of the lens seat (120), preferably with the adjustment mechanism (130);
- supporting the lens (L) with its other side surface (L2) on the lens seat (120) with its defined curvature;
- preferably attaching the lens (L) to the lens seat (120) by activating a suction force or vacuum as a holding force, preferably with the vacuum unit (200) if present, and preferably centring the lens (L) on the lens seat (120); and
- processing the at least one side surface of the lens (L) to a desired shape, preferably with the surface processing unit (510).

14. The method according to claim 13, wherein the method further comprises, during the processing step, the steps of:
- continuously determining and setting the defined curvature of the lens seat (120) further based on detected process parameters, like mechanical stresses occurring during the processing step, positional information (311) determined by sensors of the actuators, and/or a desired shape for the finished lens (L), preferably such that a curvature of the other side surface (L2) of the lens (L) at the beginning of the processing is maintained, and
- adjusting the curvature of the lens seat (120) independently from the lens (L) being seated thereon to obtain the defined curvature of the lens seat (120).

15. The method according to any one of claims 13 or 14, wherein the processing step comprises a lens surface rough cutting step, where the lens (L) is secured on both side surfaces (L1, L2) between the lens supporting part (100) and an additional holding device, which is preferably arranged opposite of the lens supporting part (100) with respect to the lens (L), and a subsequent finishing step, where the lens (L) is secured only by the lens supporting part (100).

## Patentansprüche

1. Ein Linsenträgerteil (100) zum Tragen einer Linse (L) in einem Oberflächenbearbeitungsprozess, bei dem eine (L1) der zwei gegenüberliegenden Seitenflächen (L1, L2) der Linse (L) bearbeitet wird, wobei das Linsenträgerteil (100) eine Mehrzahl an Stützelementen (110) umfasst, die relativ zueinander beweglich sind und zusammen einen gekrümmten Linsensitz (120) bilden, um die Linse (L) auf ihrer anderen Seitenfläche (L2) gegen bei dem Oberflächenbearbeitungsprozess verursachte Kräfte abzustützen;
**dadurch gekennzeichnet, dass** das Linsenträgerteil (100) ferner aufweist:
einen Einstellmechanismus (130), um während der Bearbeitung zumindest einige der Mehrzahl an Stützelementen (110) relativ zueinander zu Verschieben, um die Krümmung des Linsensitzes (120), unabhängig von einer auf den Stützelementen (110) sitzenden Linse (L), an eine definierte Krümmung anzupassen.

2. Das Linsenhalterungsteil (100) nach Anspruch 1, wobei der Einstellmechanismus (130) ausgebildet ist, um zumindest einige der Mehrzahl an Stützelementen (110) unabhängig voneinander zu bewegen, um die definierte Krümmung zu erhalten, und/oder wobei der Einstellmechanismus (130) ausgebildet ist, um zumindest eines, vorzugsweise jedes, der Stützelemente (110) relativ zu einer auf den Stützelementen (110) sitzenden Linse (L) zu bewegen.

3. Das Linsenträgerteil (100) nach Anspruch 1 oder 2, wobei der Einstellmechanismus (130) ausgebildet ist, um die jeweiligen Stützelemente (110) in einer quer, vorzugsweise orthogonal, zum Linsensitz (120) verlaufenden Richtung zu bewegen, vorzugsweise zu verschieben, und/oder in eine Richtung parallel zu einer Haltekraft zum Halten der Linse (L) am Linsenträgerteil (100), um die Krümmung des Linsensitzes (120) einzustellen.

4. Das Linsenträgerteil (100) nach einem der Ansprüche 1 bis 3, wobei die Stützelemente (110) jeweils ein distales Ende (111) aufweisen, wobei vorzugsweise die distalen Enden (111) gemeinsam den Linsensitz (120) bilden, wobei vorzugsweise die distalen Enden (111) zum Tragen der Linse (L) jeweils ein elastisches Material aufweisen oder daraus hergestellt sind und/oder wobei sich die Stützelemente (110) vorzugsweise jeweils, zwischen dem distalen Ende (111) und einem proximalen Ende (112) entlang einer Längsachse erstrecken, um mit dem Einstellmechanismus (130) gekoppelt zu werden.

5. Das Linsenträgerteil (100) nach einem der Ansprüche 1 bis 4, wobei zumindest eines der Stützelemente (110), vorzugsweise an seinem distalen Ende (111), eine äußere Umfangsdichtungskante (113) des Linsensitzes (120) bildet, um eine Umfangsdichtung einer auf dem Linsensitz (120) sitzenden Linse (L) zu ermöglichen, wobei vorzugsweise das zumindest eine, die äußere Umfangsdichtungskante (113) bildende Stützelement (110) relativ zu anderen Stützelementen (110) und/oder zu einer auf den Stützelementen (110) sitzende Linse (L) fixiert ist.

6. Das Linsenträgerteil (100) nach einem der Ansprüche 1 bis 5, wobei der Linsensitz (120) ausgebildet ist, um mit einer Vakuumeinheit (200) fluidisch verbunden zu werden, oder das Linsenträgerteil (100) ferner eine Vakuumeinheit (200) aufweist, die mit dem Linsensitz (120) fluidisch verbunden ist, um in einem Saugraum (210) zwischen dem Linsensitz (120) und einer auf dem Linsensitz (120) sitzenden Linse (L) ein Vakuum anzulegen, vorzugsweise zum Erzeugen einer Haltekraft zum Halten der Linse (L) auf dem Linsensitz (120), und wobei zum Verbinden der Vakuumeinheit (200) mit dem Linsensitz (120) und vorzugsweise mit dem Saugraum (210) vorzugsweise zwischen zumindest einigen der Stützelemente (110) Vakuumkanäle (115) ausgebildet sind.

7. Das Linsenträgerteil (100) nach einem der Ansprüche 1 bis 6, wobei der Einstellmechanismus (130) ausgebildet ist, um mit zumindest einem Aktuator (300) verbunden werden zu können, oder wobei der Einstellmechanismus (130) zumindest einen Aktuator (300), wie einen Elektromotor oder einen Pneumatikzylinder, aufweist, vorzugsweise zum Verschieben der Stützelemente (110) relativ zueinander, und/oder wobei der Einstellmechanismus (130) ein Sperrelement aufweist, welches zwischen einer ersten Position, in der die Stützelemente (110) in ihrer relativen Position zueinander und vorzugsweise zu einer auf dem Linsensitz (120) sitzenden Linse (L) fixiert sind, und einer zweiten Position, in der die Stützelemente (110) relativ zueinander und vorzugsweise zu einer auf dem Linsensitz (120) sitzenden Linse (L) beweglich sind, beweglich ist, wobei das Sperrelement vorzugsweise eine bewegliche Klammer darstellt.

8. Das Linsenträgerteil (100) nach einem der Ansprüche 1 bis 7, wobei der Einstellmechanismus (130), vorzugsweise für jedes der zu bewegenden Stützelemente (110), ferner einen Verbindungsmechanismus (140) aufweist, um, vorzugsweise direkt oder indirekt, auf das jeweilige Stützelement (110) eine Betätigungskraft eines, vorzugsweise des, Aktuators (300) zu übertragen, vorzugsweise derart, dass das Stützelement (110) linear bewegt wird.

9. Das Linsenträgerteil (100) nach einem der Ansprüche 1 bis 8, wobei die Stützelemente (110), um den Linsensitz (120) zu bilden, ringförmig ausgebildet und/oder angeordnet sind, vorzugsweise mit einer Mehrzahl an Ringdurchmessern und besonders bevorzugt in koaxialer Anordnung.

10. Ein System (500) zur Oberflächenbearbeitung von zumindest einer von zwei gegenüberliegenden Seitenflächen (L1, L2) einer Linse (L), aufweisend
ein Linsenträgerteil (100) nach einem der Ansprüche 1 bis 9, zum Tragen der Linse (L) während des Oberflächenbearbeitungsprozesses, und
eine Oberflächenbearbeitungseinheit (510) zum Bearbeiten der einen Seitenfläche (L1) der Linse (L), wie beispielsweise eine Linsenschneid- oder Linsenpoliervorrichtung;
eine Oberflächeninformations-Beschaffungseinheit (520), wie z.B. eine Kamera, ein Drucksensor, ein Lasersensor oder eine Datenbank, zum Beschaffen der Geometrie der anderen Seitenfläche (L2) der Linse (L);
eine Steuereinheit (530), zum Bestimmen und Einstellen einer definierten Krümmung des Linsensitzes (120) auf der Grundlage der beschafften Geometrie der anderen Seitenfläche (L2) der Linse (L), und zum Steuern des Einstellmechanismus (130), zum Verschieben der Stützelemente (110) relativ zueinander, um die definierte Krümmung des Linsensitzes (120) zu erhalten.

11. Das System (500) nach Anspruch 10, wobei die Steuereinheit (530) ausgebildet ist, um, vorzugsweise kontinuierlich, die definierte Krümmung des Linsensitzes (120) zu ermitteln und einzustellen, vorzugsweise weiterhin auf der Grundlage erfasster Prozessparameter, wie z.B. auftretender mechanischer Spannungen während des Bearbeitungsschritts, und/oder einer gewünschten Form für die fertige Linse (L).

12. Das System (500) nach Anspruch 10 oder 11, wobei das System (500) eine Spindel (540) aufweist, zum Drehen des Linsenträgerteils (100) während des Oberflächenbearbeitungsprozesses, wobei das Linsenträgerteil (100) und die Spindel (540) koaxial angeordnet und/oder lösbar aneinander gekoppelt sind.

13. Ein Verfahren zur Oberflächenbearbeitung zumindest einer von zwei gegenüberliegenden Seitenflächen (L1, L2) einer Linse (L), aufweisend die folgenden Schritte:
Bereitstellen eines Systems (500) zur Oberflächenbearbeitung zumindest einer von zwei gegenüberliegenden Seitenflächen (L1, L2) einer Linse (L) nach einem der Ansprüche 10 bis 12;
Beschaffen der Geometrie der anderen Seitenfläche (L2) der Linse (L), vorzugsweise mit der Oberflächeninformations-Beschaffungseinheit (520);
Ermitteln und Einstellen einer definierten Krümmung des Linsensitzes (120) auf der Grundlage der beschafften Geometrie der anderen Seitenfläche (L2) der Linse (L), vorzugsweise mittels der Steuereinheit (530);
Einstellen der Krümmung des Linsensitzes (120) unabhängig von einer darauf sitzenden Linse (L), um die definierte Krümmung des Linsensitzes (120) zu erhalten, vorzugsweise mittels dem Einstellmechanismus (130);
Anbringen der Linse (L) mit ihrer anderen Seitenfläche (L2) an den die definierte Krümmung aufweisenden Linsensitz (120);
vorzugsweise Befestigen der Linse (L) an dem Linsensitz (120) durch Aktivieren einer Saugkraft oder eines Vakuums als Haltekraft, vorzugsweise mit der Vakuumeinheit (200), falls vorhanden, und vorzugsweise Zentrieren der Linse (L) auf dem Linsensitz (120); und
Bearbeiten der zumindest einen Seitenfläche der Linse (L), vorzugsweise mittels der Oberflächenbearbeitungseinheit (510), um eine gewünschte Form zu erhalten.

14. Das Verfahren nach Anspruch 13, wobei das Verfahren während des Bearbeitungsschritts ferner die folgenden Schritte aufweist:
kontinuierliches Ermitteln und Einstellen der definierten Krümmung des Linsensitzes (120) auf der Grundlage erfasster Prozessparameter, wie während des Bearbeitungsschrittes auftretender mechanischer Belastungen, von durch Sensoren der Aktuatoren ermittelten Positionsinformationen (311) und/oder einer gewünschten Form für die fertige Linse (L), vorzugsweise so, dass eine zu Beginn der Bearbeitung bestehende Krümmung der anderen Seitenfläche (L2) der Linse (L) beibehalten wird, und
Einstellen der Krümmung des Linsensitzes (120) unabhängig von der darauf sitzenden Linse (L), um die definierte Krümmung des Linsensitzes (120) zu erhalten.

15. Das Verfahren nach einem der Ansprüche 13 oder 14, wobei der Bearbeitungsschritt einen Linsenoberflächen-Grobschneideschritt umfasst, bei dem die Linse (L) zwischen dem Linsenträgerteil (100) und einer, vorzugsweise in Bezug auf die Linse (L) gegenüber dem Linsenträgerteil (100) angeordneten, zusätzlichen Haltevorrichtung an beiden Seitenflächen (L1, L2) gehalten wird, sowie einen anschließenden Nachbearbeitungsschritt, bei dem die Linse (L) nur durch das Linsenträgerteil (100) gehalten wird.

## Revendications

1. Partie de support de lentille (100) pour supporter une lentille (L) lors d'un processus d'usinage de surface, dans lequel une première (L1) de deux surfaces latérales opposées (L1, L2) de la lentille (L) est traitée, dans laquelle la partie de support de lentille (100) comprend
- une pluralité d'éléments de support (110) qui sont mobiles les uns par rapport aux autres et forment ensemble un siège de lentille (120) ayant une courbure pour supporter la lentille (L) sur son autre surface latérale (L2) à l'encontre de forces provoquées lors du processus d'usinage de surface ;
**caractérisée en ce que** la partie de support de lentille (100) comprend en outre
- un mécanisme de réglage (130) pour déplacer au moins certains de la pluralité d'éléments de support (110) les uns par rapport aux autres pendant le traitement pour régler la courbure du siège de lentille (120) à une courbure définie indépendamment d'une lentille (L) qui est assise sur les éléments de support (110).

2. Partie de support de lentille (100) selon la revendication 1, dans laquelle le mécanisme de réglage (130) est configuré pour déplacer au moins certains de la pluralité d'éléments de support (110) indépendamment les uns des autres pour obtenir la courbure définie, et/ou
dans laquelle le mécanisme de réglage (130) est configuré de telle sorte qu'au moins un, de préférence chacun, des éléments de support (110) est mobile par rapport à une lentille (L) qui est assise sur les éléments de support (110).

3. Partie de support de lentille (100) selon la revendication 1 ou la revendication 2, dans laquelle le mécanisme de réglage (130) est configuré pour déplacer, de préférence faire coulisser, les éléments de support (110) respectifs dans une direction, qui est transversale, de préférence orthogonale, au siège de lentille (120) et/ou qui est une direction parallèle à une force de soutien pour soutenir la lentille (L) sur la partie de support de lentille (100), pour régler la courbure du siège de lentille (120).

4. Partie de support de lentille (100) selon l'une quelconque des revendications 1 à 3, dans laquelle les éléments de support (110) ont chacun une extrémité distale (111), de préférence chacune des extrémités distales (111) formant ensemble le siège de lentille (120), dans laquelle de préférence les extrémités distales (111) comprennent chacune un matériau élastique ou sont constituées de celui-ci, pour supporter la lentille (L) et/ou dans laquelle de préférence les éléments de support (110) s'étendent chacun, de préférence le long d'un axe longitudinal, entre l'extrémité distale (111) et une extrémité proximale (112) pour être couplés au mécanisme de réglage (130).

5. Partie de support de lentille (100) selon l'une quelconque des revendications 1 à 4, dans laquelle au moins un des éléments de support (110), de préférence au niveau de son extrémité distale (111), forme un bord d'étanchéité circonférentielle externe (113) du siège de lentille (120) pour permettre une étanchéité circonférentielle d'une lentille (L) qui est assise sur le siège de lentille (120), dans laquelle de préférence le au moins un élément de support (110) formant le bord d'étanchéité circonférentielle externe (113) est fixe par rapport à d'autres éléments de support (110) et/ou à une lentille (L) qui est assise sur les éléments de support (110).

6. Partie de support de lentille (100) selon l'une quelconque des revendications 1 à 5, dans laquelle le siège de lentille (120) est configuré pour pouvoir être relié fluidiquement à une unité à vide (200) ou la partie de support de lentille (100) comprenant en outre une unité à vide (200) qui est reliée fluidiquement au siège de lentille (120) pour appliquer un vide dans un espace d'aspiration (210) entre le siège de lentille (120) et une lentille (L) qui est assise sur le siège de lentille (120), de préférence pour créer une force de soutien pour soutenir la lentille (L) sur le siège de lentille (120), et dans laquelle de préférence des passages sous vide (115) sont formés entre au moins certains des éléments de support (110) pour relier l'unité à vide (200) au siège de lentille (120) et de préférence à l'espace d'aspiration (210).

7. Partie de support de lentille (100) selon l'une quelconque des revendications 1 à 6, dans laquelle le mécanisme de réglage (130) est configuré pour pouvoir être relié à au moins un actionneur (300) ou dans laquelle le mécanisme de réglage (130) comprend au moins un actionneur (300), tel qu'un moteur électrique ou un vérin pneumatique, de préférence pour déplacer les éléments de support (110) les uns par rapport aux autres, et/ou
dans lequel le mécanisme de réglage (130) comprend une partie de blocage qui est mobile entre une première position, où les éléments de support (110) sont fixes dans leur position relative les uns par rapport aux autres et de préférence par rapport à une lentille (L) qui est assise sur le siège de lentille (120), et une deuxième position, où les éléments de support (110) sont mobiles les uns par rapport aux autres et de préférence par rapport à une lentille (L) qui est assise sur le siège de lentille (120), dans laquelle de préférence la partie de blocage est une pince mobile.

8. Partie de support de lentille (100) selon l'une quelconque des revendications 1 à 7, dans laquelle le mécanisme de réglage (130) comprend en outre un mécanisme de liaison (140), de préférence pour chacun des éléments de support (110) à déplacer, pour transmettre, de préférence directement ou indirectement, une force d'actionnement d'un actionneur (300), de préférence de l'actionneur (300), à l'élément de support (110) respectif, de préférence de telle sorte que ledit élément de support (110) est déplacé linéairement.

9. Partie de support de lentille (100) selon l'une quelconque des revendications 1 à 8, dans laquelle les éléments de support (110) sont formés et/ou disposés en forme d'anneau, de préférence ayant une pluralité de diamètres d'anneau et, de manière plus préférée, disposés coaxialement pour former le siège de lentille (120).

10. Système (500) de traitement de surface d'au moins une première de deux surfaces latérales opposées (L1, L2) d'une lentille (L), comprenant
- une partie de support de lentille (100) pour supporter la lentille (L) pendant le processus d'usinage de surface selon l'une quelconque des revendications 1 à 9, et
- une unité de traitement de surface (510) pour traiter la première surface latérale (L1) de la lentille (L), telle qu'un dispositif de découpe de lentille ou de polissage de lentille ;
- une unité de fourniture d'informations de surface (520) pour fournir une géométrie de l'autre surface latérale (L2) de l'objectif (L), telle qu'un dispositif de prise de vues, un capteur de pression, un capteur laser ou une base de données ;
- une unité de commande (530) pour déterminer et établir une courbure définie du siège de lentille (120) sur la base de la géométrie fournie de l'autre surface latérale (L2) de la lentille (L), et pour commander le mécanisme de réglage (130) pour déplacer les éléments de support (110) les uns par rapport aux autres pour obtenir la courbure définie du siège de lentille (120).

11. Système (500) selon la revendication 10, dans lequel l'unité de commande (530) est configurée pour déterminer et établir de préférence en continu la courbure définie du siège de lentille (120), de préférence en outre sur la base de paramètres de processus détectés, comme des contraintes mécaniques se produisant pendant l'étape de traitement, et/ou d'une forme souhaitée pour la lentille finie (L).

12. Système (500) selon la revendication 10 ou la revendication 11, dans lequel le système (500) comprend une broche (540) pour faire tourner la partie de support de lentille (100) pendant le processus d'usinage de surface, dans lequel la partie de support de lentille (100) et la broche (540) sont disposées coaxialement et/ou sont couplées de manière amovible l'une à l'autre.

13. Procédé de traitement de surface d'au moins une première de deux surfaces latérales opposées (L1, L2) d'une lentille (L), comprenant :
- la fourniture d'un système (500) de traitement de surface d'au moins une première de deux surfaces latérales opposées (L1, L2) d'une lentille (L) selon l'une quelconque des revendications 10 à 12 ;
- la fourniture d'une géométrie de l'autre surface latérale (L2) de la lentille (L), de préférence à l'aide de l'unité de fourniture d'informations de surface (520) ;
- la détermination et l'établissement d'une courbure définie du siège de lentille (120) sur la base de la géométrie fournie de l'autre surface latérale (L2) de la lentille (L), de préférence à l'aide de l'unité de commande (530) ;
- le réglage de la courbure du siège de lentille (120) indépendamment d'une lentille (L) qui est assise dessus pour obtenir la courbure définie du siège de lentille (120), de préférence à l'aide du mécanisme de réglage (130) ;
- le support de la lentille (L) avec son autre surface latérale (L2) sur le siège de lentille (120) ayant sa courbure définie ;
- la fixation de préférence de la lentille (L) au siège de lentille (120) en activant une force d'aspiration ou un vide comme force de soutien, de préférence à l'aide de l'unité à vide (200) si présente, et de préférence en centrant la lentille (L) sur le siège de lentille (120) ; et
- le traitement de l'au moins une première surface latérale de la lentille (L) en une forme souhaitée, de préférence à l'aide de l'unité de traitement de surface (510).

14. Procédé selon la revendication 13, dans lequel le procédé comprend en outre, lors de l'étape de traitement, les étapes consistant à :
- déterminer et établir en continu la courbure définie du siège de lentille (120) sur la base en outre de paramètres de processus détectés, comme des contraintes mécaniques se produisant pendant l'étape de traitement, d'informations de position (311) déterminées par des capteurs des actionneurs, et/ou d'une forme souhaitée pour la lentille finie (L), de préférence de sorte qu'une courbure de l'autre surface latérale (L2) de la lentille (L) au début du traitement est maintenue, et
- régler la courbure du siège de lentille (120) indépendamment de la lentille (L) qui est assise dessus pour obtenir la courbure définie du siège de lentille (120).

15. Procédé selon l'une quelconque des revendications 13 ou 14, dans lequel l'étape de traitement comprend une étape de découpe grossière de surface de lentille, au cours de laquelle la lentille (L) est attachée sur les deux surfaces latérales (L1, L2) entre la partie de support de lentille (100) et un dispositif de soutien supplémentaire, qui est disposé de préférence à l'opposé de la partie de support de lentille (100) par rapport à la lentille (L), et une étape de finition ultérieure, au cours de laquelle la lentille (L) est attachée uniquement par la partie de support de lentille (100).
